# EUROPEAN PATENT APPLICATION

(11) **EP 4 606 365 A1**
(43) Date of publication of application: **27.08.2025**
(21) Application number: 25157765.6
(22) Date of filing: 13.02.2025
(51) Int. Cl.: A61G 15/12, A61G 15/16, A61C 3/00

(54) **HOLDING DEVICE FOR DENTAL MEDICAL DEVICES**

(30) Priority: 20.02.2024 KR 20240024135
(71) Applicant: B&L Biotech, Inc., Ansan-si, Gyeonggi-do 15462 (KR); Lee, In Whan, Seoul 06372 (KR)
(72) Inventor: LEE, In Whan, 06372 Seoul (KR)
(74) Representative: Prüfer & Partner mbB Patentanwälte · Rechtsanwälte

(57) **Abstract**

Disclosed is a holding device for dental medical devices, the holding device including a headrest installed on a headrest support of a dental chair, and a medical device holder connected to the headrest and configured to hold dental medical devices used during dental treatment.

## Description

### CROSS-REFERENCE TO RELATED APPLICATION

This application claims priority to Korean Patent Application No. 10-2024-0024135, filed on February 20, 2024 in the Korean Intellectual Property Office, the disclosure of which is incorporated herein by reference.

### BACKGROUND OF THE DISCLOSURE

### Field of the Disclosure

The present disclosure relates to a holding device for dental medical devices, and more particularly to a holding device for dental medical devices which enables the additional use of multiple dental medical devices, such as suction devices or retractor devices, without the assistance of a doctor or nurse during dental treatment, and can be easily applied to existing dental chairs.

### Description of the Related Art

Generally, when receiving dental treatment, a patient receives treatment from a dentist or a nurse while sitting in a dental chair. In conventional dental treatment, various types of dental medical devices such as suction devices, mirror devices, retractor devices, and tartar removers are used together. Because of this, it is very difficult for a doctor to perform dental treatment alone, and additional nurses or doctors are needed to assist.

However, as the number of people involved in dental treatment (e.g., doctors, nurses, nursing assistants, etc.) increases, the labor cost for dental treatment increases dramatically, and there is also the disadvantage that it is difficult to secure a space for the doctor's treatment work because many people are positioned to surround the patient.

### SUMMARY OF THE DISCLOSURE

Therefore, the present disclosure has been made in view of the above problems, and it is an object of the present disclosure to provide a holding device for dental medical devices, wherein the holding device enables additional utilization of a plurality of dental medical devices, such as a suction device or a retractor device, without the assistance of a doctor or a nurse during dental treatment, so dental treatment can be efficiently performed with a minimum number of people by utilizing a plurality of dental medical devices.

It is another object of the present disclosure to provide a holding device for dental medical devices which can be easily applied to dental chairs from various manufacturers so that existing dental chairs can be used as is, and since replacement of existing dental chairs is unnecessary, it can prevent cost increases in advance.

In accordance with an aspect of the present disclosure, the above and other objects can be accomplished by the provision of a holding device for dental medical devices, the holding device including: a headrest installed on a headrest support of a dental chair; and a medical device holder connected to the headrest and configured to hold dental medical devices used during dental treatment.

Preferably, the holding device for dental medical devices according to an embodiment of the present disclosure may further include at least one rod adjuster arranged between the headrest and the medical device holder to connect the headrest and the medical device holder to each other, and bent in various shapes during dental treatment.

Here, the headrest may have a structure that corresponds to various thicknesses and widths of the headrest support so as to be detachably installed regardless of the kind of a dental chair.

In addition, the rod adjuster may be configured to include a plurality of joints, and to selectively lock movement of the joints to stably hold the dental medical devices.

Preferably, the headrest may include a headrest bracket detachably installed on the headrest support so as to be positionally adjusted in upper and lower directions along the headrest support, the rod adjuster being connected to each of opposite sides of the headrest bracket; and a headrest panel coupled to a front surface of the headrest bracket to support the head of a patient sitting on the dental chair.

Preferably, the headrest bracket may include: a bracket body in the center of which a support-inserted hole is formed, the headrest support being formed to pass through the support-inserted hole; and a fixing handle movably arranged on the bracket body in a screw-fastened manner so as to fasten and fix the headrest support to an inside of the support-inserted hole.

A thickness and width of the headrest support may be different depending upon a kind of a dental chair. Accordingly, it may be preferable that the support-inserted hole has a cross-sectional shape of a multi-stage structure formed stepwise according to a plurality of thicknesses and widths corresponding to thicknesses and widths of the headrest support.

Preferably, the bracket body may include: a front bracket arranged at the front of the headrest support, the headrest panel being coupled to the front surface of the front bracket, and a front insertion hole forming a front part of the support-inserted hole being formed stepwise on the front bracket; a rear bracket arranged at the rear of the headrest support so as to face the front bracket, the rod adjuster being respectively connected to opposite sides of the rear bracket, and a rear insertion hole forming a rear part of the support-inserted hole being formed stepwise on the rear bracket; and a plurality of bracket-fastening members fastened and fixed to the front bracket and the rear bracket in a state in which the headrest support is placed between the front insertion hole and the rear insertion hole.

Preferably, the headrest panel may be fastened and fixed to a front surface of the headrest bracket by frame-fastening members, and a Velcro member may be provided on a front surface of the front surface of the headrest panel to detachably fix a neck support.

Preferably, the rod adjuster may include: first rod members whose one end is fastened and fixed to each of opposite sides of the headrest bracket; a plurality of second rod members arranged between another end of each of the first rod members and the medical device holder and lengthily connected along a longitudinal direction; and a ball-and-socket joint member provided at each of at least one connector between the first rod members and the second rod members, at least one connector between the second rod members, and at least one connector between the second rod members and the medical device holder, and configured in a ball-socket structure capable of joint movement of a rotational pattern.

Preferably, the ball-and-socket joint member may include: a ball joint formed in a ball structure; a socket joint formed in a spherical socket structure to which the ball joint is rotatably coupled; and a j oint locker operably formed on the socket j oint to selectively restrict rotation of the ball joint and the socket joint.

Here, a screw fastener may be formed at one end of each of the first rod members to be connected in a screw-fastened manner to rod connectors formed on opposite sides of the headrest bracket, and the socket joint may be formed at another end of the first rod member.

In addition, the ball joint may be formed at one end of the second rod member, and the socket joint may be formed at another end of the second rod member.

In addition, the ball joint may be formed at one end of the medical device holder.

Meanwhile, at least one of the first rod member and the second rod members may be formed in a continuous joint structure of a javara structure or centipede type that can be freely bent.

Preferably, the medical device holder may include: a holder connection rod whose one end is connected to an end of the rod adjuster in a structure capable of joint movement; a holder for holding the dental medical devices; and a freely bendable rod provided to connect the holder and another end of the holder connection rod to each other and formed in a continuous joint structure of a javara structure or centipede type that can be freely bent.

Differently from above, the medical device holder may include: a holder connection rod whose one end is connected to an end of the rod adjuster in a structure capable of joint movement; a holder for holding the dental medical devices; and a ball-and-socket joint member provided to connect the holder and another end of the holder connection rod and formed in a ball-socket structure capable of joint movement of a rotational pattern.

Differently from above, the medical device holder may include: a holder connection rod whose one end is connected to an end of the rod adjuster in a structure capable of joint movement; a holder connected to another end of the holder connection rod and configured to hold the dental medical devices; and a fitting groove formed in the holder such that a portion of the dental medical device is fitted and fixed to the fitting groove.

The holder connection rod may be formed in a continuous joint structure of a javara structure or centipede type that can be freely bent.

Preferably, the holding device for dental medical devices according to an embodiment of the present disclosure may further include a tray device detachably placed on the rod adjuster to temporarily store the dental medical devices and various auxiliary materials required for dental treatment.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 schematically illustrates a dental chair to which a holding device for dental medical devices according to an embodiment of the present disclosure is to be applied;
FIG. 2 illustrates a holding device for dental medical devices which is to be applied to the dental chair shown in FIG. 1;
FIG. 3 schematically illustrates the holding device for dental medical devices shown in FIG. 2;
FIGS. 4 and 5 respectively illustrate the perspective view and plan view of a headrest shown in FIG. 3;
FIGS. 6 and 7 illustrate a modified example of the medical device holder shown in FIG. 2, and particularly illustrate the perspective view and exploded view of a medical device holder for holding the suction device shown in FIG. 3;
FIGS. 8 and 9 illustrate another modified example of the medical device holder shown in FIG. 2, and particularly illustrate the perspective view and exploded view of a medical device holder for holding a retractor device shown in FIG. 3;
FIG. 10 illustrates an exploded view of a tray device shown in FIG. 2; and
FIG. 11 illustrates a cover bracket of the tray device shown in FIG. 10.

### DETAILED DESCRIPTION OF THE DISCLOSURE

Embodiments of the present disclosure will now be described more fully with reference to the accompanying drawings. This disclosure may, however, be embodied in many different forms and should not be construed as limited to the embodiments set forth herein. Like reference numerals in the drawings denote like elements.

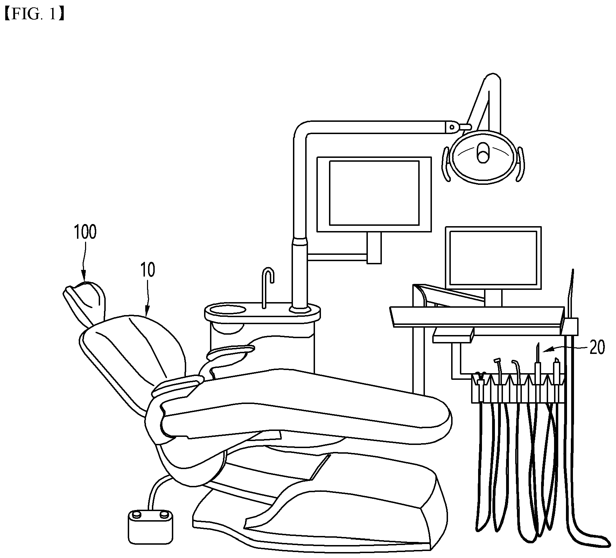

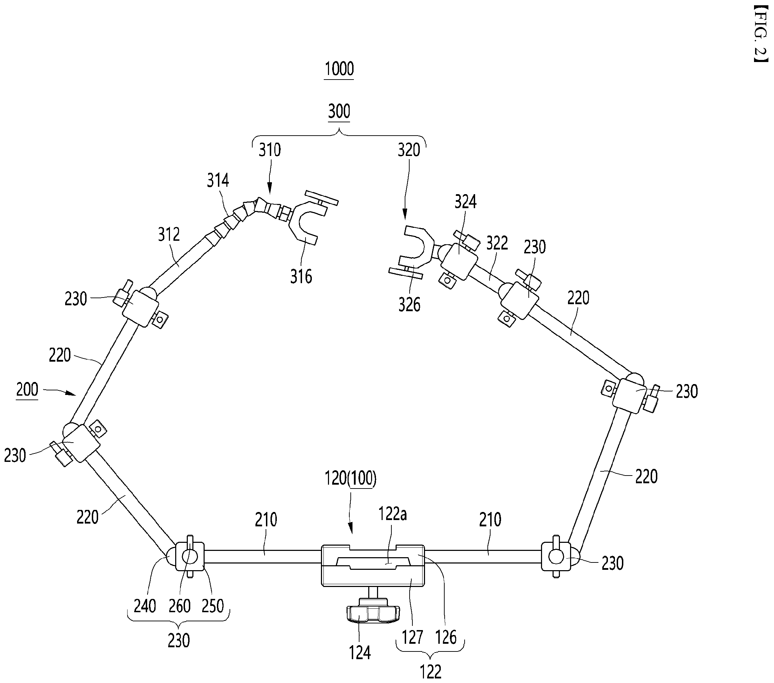

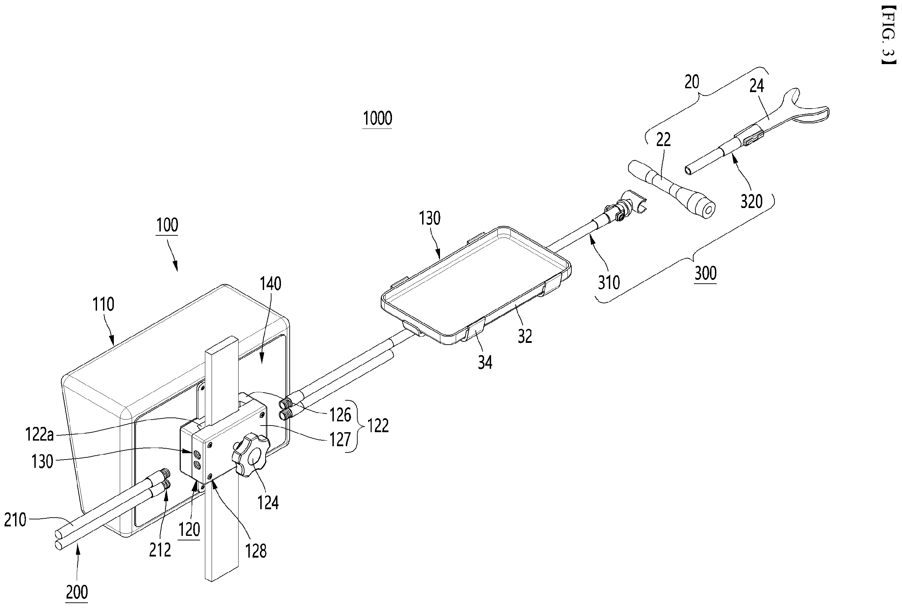

FIG. 1 schematically illustrates a dental chair 10 to which a holding device 1000 for dental medical devices according to an embodiment of the present disclosure is to be applied, FIG. 2 illustrates the holding device 1000 for dental medical devices which is to be applied to the dental chair 10 shown in FIG. 1. FIG. 3 schematically illustrates the holding device 1000 for dental medical devices shown in FIG. 2, and FIGS. 4 and 5 respectively illustrate the perspective view and plan view of a headrest 100 shown in FIG. 3.

Referring to FIGS. 1 to 3, the holding device 1000 for dental medical devices according to an embodiment of the present disclosure may include a headrest 100, rod adjusters 200, and a medical device holder 300.

The holding device 1000 for dental medical devices according to the embodiment may be installed on the dental chair 10 shown in FIG. 1, so that the number of dental medical devices 20 used for dental treatment may be increased without additional involvement of a doctor or a nurse. Here, the holding device 1000 for dental medical devices may be intalled on a headrest support 12 provided on an existing dental chair 10 and used for dental treatment.

Hereinafter, in this embodiment, it is described that the medical device holder 300 is connected to the headrest 100 via the rod adjusters 200. However, the present disclosure is not limited to this, and it is also possible to omit the rod adjusters 200 and to directly connect the medical device holder 300 to the headrest 100.

Referring to FIGS. 2 to 5, the headrest 100 of this embodiment may be detachably installed and fixed to the headrest support 12 of the dental chair 10. Here, it is preferable that the headrest 100 is formed in a structure corresponding to headrest supports 12 with various thicknesses and widths so that it can be installed regardless of the kind of the dental chair 10.

For example, the headrest 100 may include a headrest bracket 120 and a headrest panel 140.

The headrest bracket 120 may be detachably installed on the headrest support 12. The headrest bracket 120 may be formed so as to be positionally adjustable in upper and lower directions along the headrest support 12. In addition, a plurality of rod adjusters 200 may be connected to each of opposite sides of the headrest bracket 120. For reference, a detailed structure of the headrest bracket 120 of the embodiment is described again below.

The headrest panel 140 may be coupled with a front surface of the headrest bracket 120 to support a patient sitting on the dental chair 10. For example, the headrest panel 140 may be fixedly fastened to the front surface of the headrest bracket 120 by a plurality of frame-fastening members 144.

Here, positioning grooves may be formed on the front surface of the headrest bracket 120, and positioning protrusions to be inserted into the positioning grooves of the headrest bracket 120 may be formed to protrude from a rear surface of the headrest panel 140. By using the positioning grooves and the positioning protrusions, the headrest panel 140 may be stably placed at a correct position of the headrest bracket 120.

Meanwhile, a neck support 110 may be detachably placed on the headrest panel 140. The neck support 110 is intended to support more comfortably and stably the head of a patient sitting on the dental chair 10, and may be detachably fixed to Velcro members 142 arranged on the front surface of the headrest panel 140.

Hereinfter, a detailed configuration of the headrest bracket 120 FIGS. 3 to 5 is examined.

As shown in FIGS. 3 to 5, the headrest bracket 120 of the embodiment may include a bracket body 122 and a fixing handle 124.

A support-inserted hole 122a, through which the headrest support 12 is to be inserted to pass, may be formed in the center of the bracket body 122, and the headrest panel 140 may be coupled to the front surface of the bracket body 122 in a fastening manner.

Here, the support-inserted hole 122a may have a cross-sectional shape having a multi-stage structure formed stepwise according to a plurality of thicknesses T1 and T2 and widths W1 and W2 that correspond to thicknesses T1 and T2 and widths W1 and W2 of the headrest support 12. In addition, the headrest support 12 may have different thicknesses T1 and T2 and widths W1 and W2 depending upon the kind of the dental chair 10. Accordingly, the headrest support 12 may be placed within a specific space in the support-inserted hole 122a, and the specific space of the support-inserted hole 122a may have thicknesses and widths corresponding to the thicknesses T1 and T2 and widths W1 and W2 of the headrest support 12.

For example, the bracket body 122 may include a front bracket 126, a rear bracket 127, and bracket-fastening members 128.

The front bracket 126 may be placed at the front of the headrest support 12. The headrest panel 140 may be coupled to the front surface of the front bracket 126 in a fastening manner. Meanwhile, a front insertion hole 126a forming a front part of the support-inserted hole 122a may be formed at the rear of the front bracket 126. The front insertion hole 126a may be formed stepwise in a multi-stage structure corresponding to the thicknesses T1 and T2 and widths W1 and W2 of the headrest support 12.

The rear bracket 127 may be placed at the rear of the headrest support 12 to face the front bracket 126. A plurality of rod connectors 130 whose inner peripheral surface has a female screw for connecting each of a plurality of rod adjusters 200 may be formed on opposite sides of the rear bracket 127. Meanwhile, a rear insertion hole 127a forming the rear part of the support-inserted hole 122a may be formed on the front surface of the rear bracket 127. The rear insertion hole 127a may be formed stepwise a multi-stage structure corresponding to the thicknesses T1 and T2 and widths W1 and W2 of the headrest support 12.

The bracket-fastening members 128 may be fixedly fastened to the front bracket 126 and the rear bracket 127 in a state where the headrest support 12 is placed between the front insertion hole 126a and the rear insertion hole 127a.

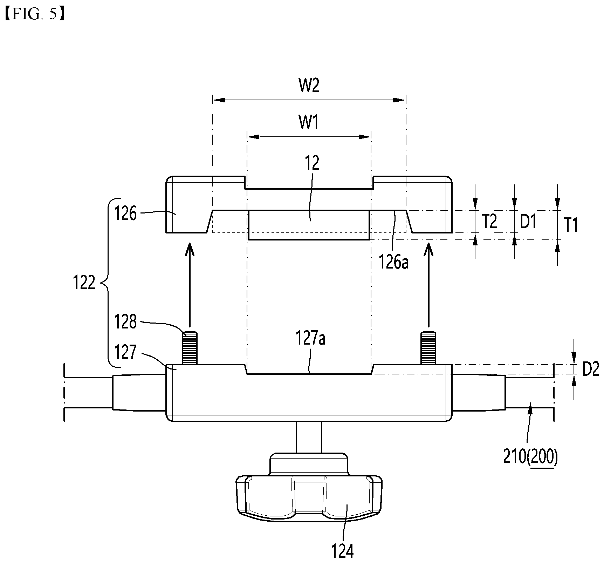

Referring to FIG. 5, the multi-stage structure of the support-inserted hole 122a formed by the front insertion hole 126a and the rear insertion hole 127a is described in more detail. That is, the support-inserted hole 122a of FIG. 5 may be provided as a two-stage structure for selective insertion of the headrest support 12 indicated by solid lines and dotted lines.

In the case of the headrest support 12 indicated by solid lines of FIG. 5, the depth D1+D2 of the support-inserted hole 122a, which is the sum of the depth D1 of the front insertion hole 126a and the depth D2 of the rear insertion hole 127a, may be the same as the thickness T1 of the headrest support 12, and the height W1 of the rear insertion hole 127a may be the same as the width W1 of the headrest support 12. Accordingly, the headrest support 12 indicated by the solid lines may be inserted into both the front insertion hole 126a and the rear insertion hole 127a, so that movement in the left and right direction may be prevented by the rear insertion hole 127a.

On the other hand, in the case of the headrest support 12 indicated by dotted lines shown in FIG. 5, the depth D1 of the front insertion hole 126a may be the same as the thickness T2 of the headrest support 12, and the height W2 of the front insertion hole 126a may be the same as the width W2 of the headrest support 12. Accordingly, the headrest support 12 indicated by dotted lines may be inserted only into the front insertion hole 126a, so that movement in the left and right direction may be prevented by the front insertion hole 126a.

The fixing handle 124 may be movably arranged on the rear surface of the bracket body 122 in a screw-fastened manner. That is, the headrest support 12 may be fastened and fixed to the bracket body 122 in a state of being inserted into the support-inserted hole 122a by rotating the fixing handle 124 in a forward direction. On the other hand, the fastened state of the headrest support 12 may be released by rotating the fixing handle 124 in a reverse direction.

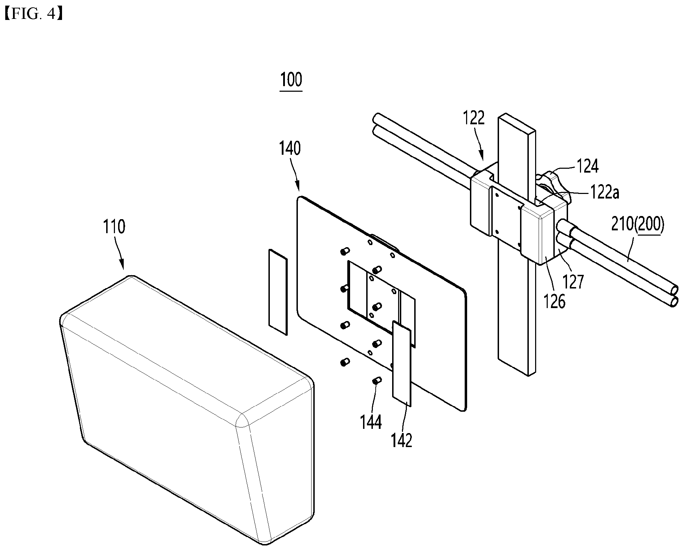

Referring to FIGS. 2 to 4, the rod adjusters 200 of this embodiment may be formed in a structure that is extended in a rod shape from the headrest bracket 120 of the headrest 100, and may have multiple joints formed so that they can be bent into various shapes during dental treatment. That is, the rod adjusters 200 may have a plurality of joints, and may be formed in a structure that can selectively lock the movement of the joints so as to stably hold the dental medical devices 20. As shown in FIGS. 3 and 4, two rod adjusters 200 may be disposed on each of the opposite sides of the headrest bracket 120, without being limited thereto. Alternatively, one or three or more rod adjusters 200 may be disposed on each of the opposite sides of the headrest bracket 120.

For example, the rod adjusters 200 may include first rod members 210, second rod members 220, and ball-and-socket joint members 230.

One end of each of the first rod members 210 may be fixed to each of the rod connectors 130 formed on the opposite sides of the headrest bracket 120 in a fastening manner, and one end of the second rod member 220 and a socket joint 250, which is described below, of the ball-and-socket joint members 230 may be formed at the other end of each of the first rod members 210. For this, a male screw-shaped screw fastener 212 may be formed at the end of the first rod members 210, and female screw-shaped rod connectors 130, which are to be fastened and coupled to the male screw of the screw fastener 212, may be formed on the opposite sides of the rear bracket 127.

The plural second rod members 220 may be lengthily connected between the other end of the first rod members 210 and the medical device holder 300 in a longitudinal direction. For this, a ball joint 240, which is described below, of the ball-and-socket joint members 230 may be formed at one end of each of the second rod members, and the socket joint 250 may be formed at the other end of the second rod member 220. In this embodiment, two second rod members 220 are arranged between the first rod members 210 and the medical device holder 300 as shown in FIG. 2, but the present disclosure is not limited thereto. One or three or more second rod members 220 may be arranged between the first rod members 210 and the medical device holder 300.

Meanwhile, in the embodiment, the first rod members 210 and the second rod members 220 are provided as rod members made of a metal material that is not easily deformed, but the present disclosure is not limited thereto. For example, at least one of the first rod members 210 and the second rod members 220 may be manufactured in a continuous joint structure of a javara structure or centipede type that can be freely bent by an external force equal to or greater than a set magnitude, or may be made of a material that can be plastically deformed by an external force equal to or greater than a set size. Here, it is preferable that the external force greater than the set size is set to be greater than the weight of the dental medical devices 20 and the rod adjusters 200.

The ball-and-socket joint members 230 are components that perform the joint function of the rod adjusters 200, and may be respectively provided at connectors between the first rod members 210 and the second rod members 220, connectors between the second rod members 220, and connectors between the second rod members 220 and the medical device holder 300. The ball-and-socket joint members 230 may be manufactured in a ball-socket structure so as to provide a joint movement of a rotational pattern.

For example, the ball-and-socket joint members 230 may include the ball joint 240 formed in a ball structure, the socket joint 250 formed in a spherical socket structure to which the ball joint 240 is rotatably coupled, and a joint locker 260 operably formed at the socket joint 250 to selectively restrict rotation of the ball joint 240 and the socket joint 250.

Referring to FIGS. 2 and 3, the medical device holder 300 of the embodiment may be provided to hold the dental medical devices 20 used during dental treatment. The medical device holder 300 may be connected to an end of the rod adjusters 200. Accordingly, the medical device holder 300 may be placed at various positions by bending the shape of the rod adjusters 200.

The ball joint 240, which is to be rotatably coupled to the socket joint 250 formed at the other end of the second rod members 220 of the rod adjusters 200, may be formed at one end of the medical device holder 300. A holder structure, where the dental medical device 20 is to be detachably held, may be formed at the other end of the medical device holder 300.

As shown in FIG. 2, the medical device holder 300 of the embodiment may include a left medical device holder 310 connected to a left rod adjuster 200 that is placed on the left side of the headrest 100, and a right medical device holder 320 connected to the right rod adjuster 200 that is placed on the right side of the headrest 100.

Here, the left medical device holder 310 may include a left holder connection rod 312 whose one end is connected to the end of the rod adjuster 200, a left holder 316 for holding the dental medical device 20, and a freely bendable rod 314 provided to connect the left holder 316 and the other end of the left holder connection rod 312 to each other and formed in a continuous joint structure of a javara structure or centipede type that can be freely bent.

In addition, the right medical device holder 320 may include a right holder connection rod 322 whose one end is connected to the end of the rod adjusters 200 in a structure capable of joint movement, a right holder 326 for holding the dental medical devices 20, and a ball-and-socket joint member 324 provided to connect the right holder 326 and the other end of the right holder connection rod 322 to each other and formed in a ball-socket structure providing a joint movement of a rotational pattern.

Meanwhile, the left medical device holder 310 and the right medical device holder 320 are described as having different structures in the embodiment, but the present disclosure is not limited thereto. The left medical device holder 310 and the right medical device holder 320 may be formed in the same structure. In particular, the left holder 316 and the right holder 326 are provided as holder frames with a U-shaped cross-section to which bolt-shaped fastening members are fastened, but may be modified into various structures such as structures where a suction device 22, a retractor device 24, etc. can be attached and detached.

In addition, the left holder connection rod 312 and the right holder connection rod 322 are provided as rod members made of metal or plastic that is not easily deformed in the embodiment, but the present disclosure is not limited thereto. For example, at least one of the left holder connection rod 312 and the right holder connection rod 322 may be formed in a continuous joint structure of a javara structure or centipede type that can be freely bent by an external force equal to or greater than a set magintude, or may be made of a material that is plastically deformed by an external force equal to or greater than a set size. Here, it is preferable that the external force equal to or greater than the set size is set to be greater than the weight of the dental medical devices 20 and the medical device holder 310, 320.

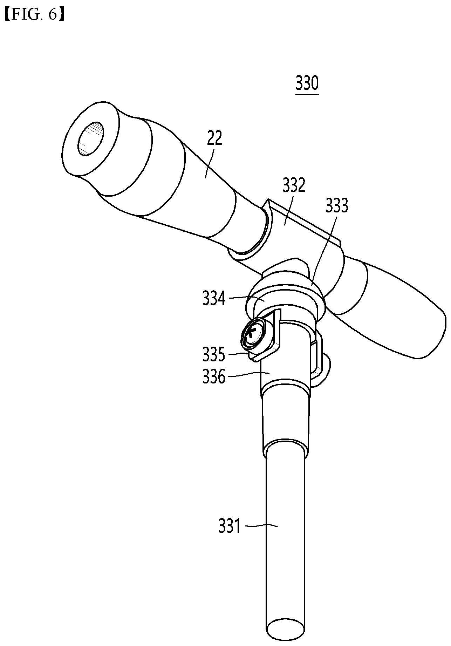

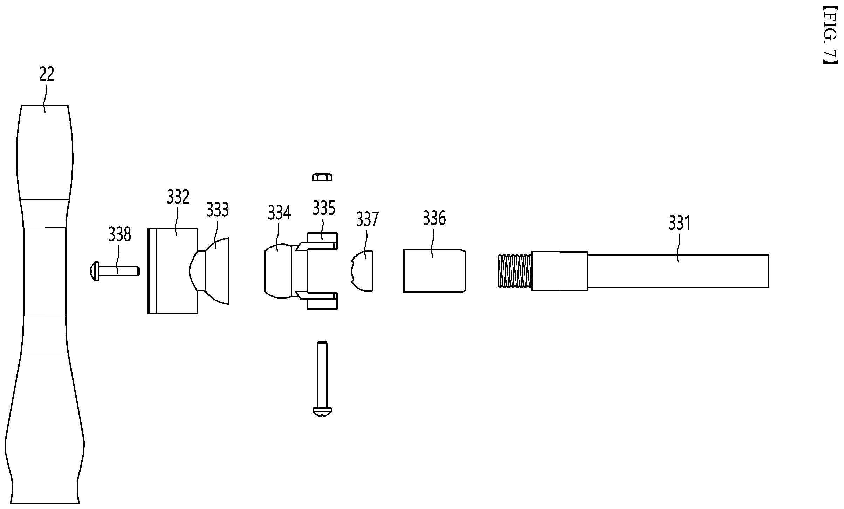

FIGS. 6 and 7 illustrate a modified example of the medical device holder 300 shown in FIG. 2, and particularly illustrate the perspective view and exploded view of a medical device holder 330 for holding the suction device 22 shown in FIG. 3.

That is, FIGS. 6 and 7 illustrate a modified example of the medical device holder 330 according to the embodiment, and the modified example may be formed to detachably hold the suction device 22.

Referring to FIGS. 6 and 7, the medical device holder 330 of the modified example may include a holder connection rod 331 whose one end is connected to an end of the rod adjusters 200, a suction holder 332 for holding the suction device 22, and ball-and-socket joint members 333 and 334 provided to connect the suction holder 332 and the other end of the holder connection rod 331 and formed in a ball-socket structure capable of a joint movement of a rotational pattern.

Here, the suction holder 332 may be formed in a C-shaped cross-sectional structure that holds to wrap around the outer circumference of the suction device 22. A socket joint 333 for the ball-and-socket joint members 333 and 334 may be formed at a lower part of the suction holder 332.

In addition, a ball joint 334, which is to be rotatably inserted into the socket joint 333, may be connected to the other end of the holder connection rod 331. A connector-fastening hole 335, which is to be fastened to a connector member 336 coupled to the other end of the holder connection rod 331 by a fastening bolt, may be formed at the ball joint 334.

In addition, a hemispherical member 337 may be inserted into the ball joint 334, and the hemispherical member 337 may be connected to the socket joint 333 by the fastening member 338 to be integrally rotated along the outer peripheral surface and inner peripheral surface of the ball joint 334.

Meanwhile, the holder connection rod 331 of the embodiment is provided as a rod member made of metal or plastic that is not easily deformed, but the present disclosure is not limited thereto. For example, the holder connection rod 331 may be formed in a continuous joint structure of a javara structure or centipede type that can be freely bent by an external force equal to or greater than a set magintude, or may be made of a material that is plastically deformed by an external force equal to or greater than a set size. Here, it is preferred that the external force equal to or greater than the set size is set to be greater than the weight of the suction device 22 and the medical device holder 330.

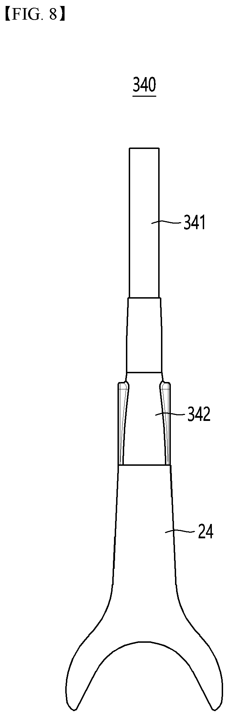

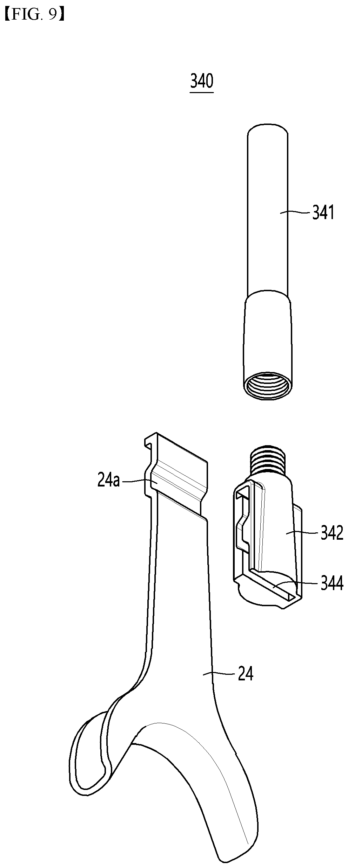

FIGS. 8 and 9 illustrate another modified example of the medical device holder 300 shown in FIG. 2, and particularly illustrate the perspective view and exploded view of a medical device holder 340 for holding the retractor device 24 shown in FIG. 3.

That is, FIGS. 8 and 9 illustrate another modified example of the medical device holder 340 according to the embodiment. This medical device holder 340 may be formed to detachably hold the retractor device 24.

Referring to FIGS. 8 and 9, the medical device holder 340 of the modified example may include a holder connection rod 341 whose one end is connected to the end of the rod adjusters 200, a retractor holder 342 connected to the other end of the holder connection rod 341 and configured to hold the retractor device 24, and a fitting groove 344, where a portion of the retractor device 24 is to be fitted and fixed, formed at the retractor holder 342.

Here, the fitting groove 344 may be formed in a structure that becomes narrower from the entrance side thereof toward the inside thereof such that a portion of the retractor device 24 is inserted into the fitting groove 344 in a press-fit manner. Here, it is preferred that a portion of each of the fitting groove 344 and the retractor device 24 is bent stepwise such that the retractor device 24 does not fall out in the longitudinal direction of the medical device holder 340.

Meanwhile, the holder connection rod 341 of the embodiment is provided as a rod member made of metal or plastic that is not easily deformed, but the present disclosure is not limited thereto. For example, the holder connection rod 341 may be formed in a continuous joint structure of a javara structure or centipede type that can be freely bent by an external force equal to or greater than a set magintude, or may be made of a material that is plastically deformed by an external force equal to or greater than a set size. Here, it is preferred that the external force equal to or greater than the set size is set to be greater than the weight of the suction device 22 and the medical device holder 340.

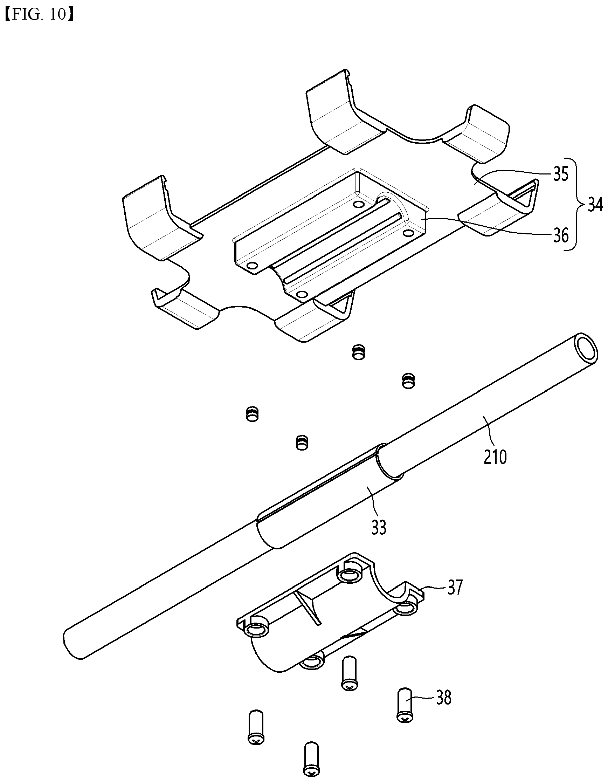

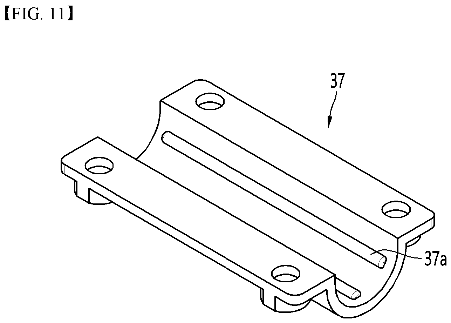

FIG. 10 illustrates an exploded view of a tray device 30 shown in FIG. 2, and FIG. 11 illustrates a cover bracket 37 of the tray device 30 shown in FIG. 10.

Referring to FIGS. 10 and 11, the holding device 1000 for dental medical devices according to an embodiment of the present disclosure may further include the tray device 30 detachably arranged at the rod adjusters 200.

The tray device 30 of the embodiment may perform the function of temporarily storing the dental medical devices 20 and various auxiliary materials required during dental treatment. A single or multiple tray devices 30, which are the same as the tray device 30, may be installed at the rod adjusters 200. As needed, the installation positions of the tray devices 30 may be changed.

For example, the tray device 30 of the embodiment may include a tray 32, a tray holder 34, a cover bracket 37 and a cover bracket-fastening member 38.

The tray 32 may be provided in a plate shape.

The tray holder 34 may include a tray supporter 35 for detachably supporting the tray 32, and a support bracket 36 formed at a lower part of the tray supporter 35 and seated on an upper part of the rod adjuster 200. The tray supporter 35 and the support bracket 36 may be injection-molded as an integral structure.

The cover bracket 37 may be formed to surround a lower part of the rod adjuster 200, and may be fixedly fastened to the support bracket 36 by a plurality of cover bracket-fastening members 128. The cover bracket 37 may include a semicircular pipe that wraps the lower part of the rod adjuster 200, and fixing ribs 37a may be formed on the surface of the semicircular pipe to be pressed tightly against the lower part of the rod adjusters 200.

As apparent above, a holding device for dental medical devices according to an embodiment of the present disclosure enables additional utilization of a plurality of dental medical devices, such as a suction device or a retractor device, without the assistance of a doctor or a nurse during dental treatment, so dental treatment can be efficiently performed with a minimum number of people by utilizing a plurality of dental medical devices.

In addition, the holding device for dental medical devices according to an embodiment of the present disclosure is structured to be applicable to any headrest supports of dental chairs from various manufacturers, so that existing dental chairs can be used as is, and since replacement of the dental chair is unnecessary, the problem of unnecessary cost increases can be prevented in advance, and it can be used quickly and easily in existing dental clinics.

In addition, the holding device for dental medical devices according to an embodiment of the present disclosure can easily place a medical device holder connected to the end of a plurality of rod adjusters at a desired location by bending the rod adjusters connected to a headrest in various shapes, and can increase the number of dental medical devices used by utilizing dental medical devices held in the medical device holder for dental treatment of a patient, thereby improving the efficiency of dental treatment.

In addition, the holding device for dental medical devices according to an embodiment of the present disclosure includes a headrest support capable of having various sizes depending upon the kind of dental chair, and support-inserted holes of a headrest bracket are provided in a cross-sectional shape of a multi-stage structure with a plurality of thicknesses and widths stepwise in response to the thickness and width of the headrest support, so that a fixing bracket can be stably installed and fixed to the headrest support having different sizes depending upon the kind of a dental chair. Accordingly, the usability and product commonality of the holding device for dental medical devices can be further increased.

As described above, the embodiments of the present disclosure have been explained with reference to specific details, such as specific components, and limited embodiments and drawings, but these are only provided to help a more general understanding of the present disclosure, and the present disclosure is not limited to the embodiments. Various modifications and variations can be made from these descriptions by those with ordinary knowledge in the field to which the present disclosure belongs. Therefore, it should be understood that the idea of the present disclosure is not limited to the described embodiments, and not only the accompanying claims, but also all particulars that are equivalent or alternative to the scope of the claims fall into the category of the idea of the present disclosure.

### [Description of Symbols]

1000: holding device for dental medical devices
100: headrest
110: neck support
120: headrest bracket
122: bracket body
122a: support-inserted hole
124: fixing handle
126: front bracket
127: rear bracket
128: bracket-fastening member
130: rod connecter
140: headrest panel
200: rod adjuster
210: first rod member
220: second rod member
230: ball-and-socket joint member
240: ball joint
250: socket joint
260: joint locker
300: medical device holder
310: left medical device holder
320: right medical device holder
330, 340: another modified example of medical device holder
10: dental chair
12: headrest support
20: dental medical device
30: tray device

## Claims

1. A holding device for dental medical devices, the holding device comprising:
a headrest installed on a headrest support of a dental chair; and
a medical device holder connected to the headrest and configured to hold dental medical devices used during dental treatment.

2. The holding device according to claim 1, further comprising at least one rod adjuster arranged between the headrest and the medical device holder to connect the headrest and the medical device holder to each other, and bent in various shapes during dental treatment.

3. The holding device according to claim 2, wherein the headrest has a structure that corresponds to various thicknesses and widths of the headrest support so as to be detachably installed regardless of a kind of a dental chair, and
the rod adjuster is configured to comprise a plurality of joints, and to selectively lock movement of the joints to stably hold the dental medical devices.

4. The holding device according to claim 2 or 3, wherein the headrest comprises:
a headrest bracket detachably installed on the headrest support so as to be positionally adjusted in upper and lower directions along the headrest support, the rod adjuster being connected to each of opposite sides of the headrest bracket; and
a headrest panel coupled to a front surface of the headrest bracket to support the head of a patient sitting on the dental chair.

5. The holding device according to claim 4, wherein the headrest bracket comprises:
a bracket body in the center of which a support-inserted hole is formed, the headrest support being formed to pass through the support-inserted hole; and
a fixing handle movably arranged on the bracket body in a screw-fastened manner so as to fasten and fix the headrest support to an inside of the support-inserted hole.

6. The holding device according to claim 5, wherein a thickness and width of the headrest support are different depending upon a kind of dental chair, and
the support-inserted hole has a cross-sectional shape of a multi-stage structure formed stepwise according to a plurality of thicknesses and widths corresponding to thicknesses and widths of the headrest support,
wherein the bracket body comprises:
a front bracket arranged at the front of the headrest support, the headrest panel being coupled to the front surface of the front bracket, and a front insertion hole forming a front part of the support-inserted hole being formed stepwise on the front bracket;
a rear bracket arranged at the rear of the headrest support so as to face the front bracket, the rod adjuster being respectively connected to opposite sides of the rear bracket, and a rear insertion hole forming a rear part of the support-inserted hole being formed stepwise on the rear bracket; and
a plurality of bracket-fastening members fastened and fixed to the front bracket and the rear bracket in a state in which the headrest support is placed between the front insertion hole and the rear insertion hole.

7. The holding device according to one of claims 4 to 6, wherein the headrest panel is fastened and fixed to a front surface of the headrest bracket by frame-fastening members, and
a Velcro member is provided on a front surface of the front surface of the headrest panel to detachably fix a neck support.

8. The holding device according to one of claims 4 to 7, wherein the rod adjuster comprises:
first rod members whose one end is fastened and fixed to each of opposite sides of the headrest bracket;
a plurality of second rod members arranged between another end of each of the first rod members and the medical device holder and lengthily connected along a longitudinal direction; and
a ball-and-socket joint member provided at each of at least one connector between the first rod members and the second rod members, at least one connector between the second rod members, and at least one connector between the second rod members and the medical device holder, and configured in a ball-socket structure capable of joint movement of a rotational pattern,
wherein the ball-and-socket joint member comprises:
a ball joint formed in a ball structure;
a socket joint formed in a spherical socket structure to which the ball joint is rotatably coupled; and
a joint locker operably formed on the socket joint to selectively restrict rotation of the ball joint and the socket joint.

9. The holding device according to claim 8, wherein a screw fastener is formed at one end of each of the first rod members to be connected in a screw-fastened manner to rod connectors formed on opposite sides of the headrest bracket, and the socket joint is formed at another end of the first rod member,
the ball joint is formed at one end of the second rod member, and the socket joint is formed at another end of the second rod member, and
the ball joint is formed at one end of the medical device holder.

10. The holding device according to claim 8 or 9, wherein at least one of the first rod member and the second rod members is formed in a continuous joint structure of a javara structure or centipede type that can be freely bent.

11. The holding device according to one of claims 2 to 10, wherein the medical device holder comprises:
a holder connection rod whose one end is connected to an end of the rod adjuster in a structure capable of joint movement;
a holder for holding the dental medical devices; and
a freely bendable rod provided to connect the holder and another end of the holder connection rod to each other and formed in a continuous joint structure of a javara structure or centipede type that can be freely bent.

12. The holding device according to one of claims 2 to 11, wherein the medical device holder comprises:
a holder connection rod whose one end is connected to an end of the rod adjuster in a structure capable of joint movement;
a holder for holding the dental medical devices; and
a ball-and-socket joint member provided to connect the holder and another end of the holder connection rod and formed in a ball-socket structure capable of joint movement of a rotational pattern.

13. The holding device according to one of claims 2 to 12, wherein the medical device holder comprises:
a holder connection rod whose one end is connected to an end of the rod adjuster in a structure capable of joint movement;
a holder connected to another end of the holder connection rod and configured to hold the dental medical devices; and
a fitting groove formed in the holder such that a portion of the dental medical device is fitted and fixed to the fitting groove.

14. The holding device according to one of claims 11 to 13, wherein the holder connection rod is formed in a continuous joint structure of a j avara structure or centipede type that can be freely bent.

15. The holding device according to one of claims 2 to 14, further comprising a tray device detachably placed on the rod adjuster to temporarily store the dental medical devices and various auxiliary materials required for dental treatment.
